# EUROPEAN PATENT SPECIFICATION

(11) **EP 3 459 684 B1**
(45) Date of publication and mention of the grant of the patent: **04.11.2020**
(21) Application number: 17798777.3
(22) Date of filing: 19.05.2017
(51) Int. Cl.: B25J 5/00, B25J 11/00, B25J 19/00, A47L 11/40, A47L 9/00

(54) **COMBINED ROBOT**
KOMBINIERTER ROBOTER
ROBOT COMBINÉ

(30) Priority: 19.05.2016 CN 201610333081
(43) Date of publication of application: 27.03.2019
(73) Proprietor: Ecovacs Robotics Co., Ltd., Suzhou, Jiangsu 215168 (CN)
(72) Inventor: MENG, Fanming, Suzhou Jiangsu 215168 (CN)
(74) Representative: Viering, Jentschura & Partner mbB Patent- und Rechtsanwälte
(86) International application number: PCT/CN2017/085054
(87) International publication number: WO 2017/198214

(56) References cited:
- CN-A- 105 142 478
- CN-U- 202 005 711
- CN-U- 202 005 711
- CN-U- 203 693 503
- CN-U- 205 201 560
- CN-U- 205 734 879
- JP-A- 2006 130 005
- US-A1- 2008 307 590

## Description

### FIELD

The disclosure relates to a combined robot.

### BACKGROUND

A traditional floor sweeping robot may be provided with a front follower wheel at the bottom and two driving wheels located on two sides of a middle portion of a machine body. As the center of gravity of the machine body is located in a front side of the machine body, the robot will hardly jolt during walking, even if encountering uneven surfaces such as a slope and a small step.

CN 202005711U discloses an automatically detachable robot including a module part (10) and a robot body (20), wherein the robot body (20) comprises a driving unit (26), a walking mechanism (28), a control unit (21) and an energy supply unit; the module part (10) is provided with a first working module, a control mechanism (132) and an automatic combination actuating mechanism (29); the control mechanism (132) control the automatic combination actuating mechanism (29) to combine the module part (10) on the robot body (20) according to the instructions of the control unit (21); and the first working module is supplied with power to work by the energy supply unit. According to the actual working requirements, the module part (10) is separated or combined with the robot body (20), therefore, the energy waste is avoided, and the purpose of saving energy and electricity is achieved.

US 20080307590A1 relates to a swimming pool cleaner with wheels driven by a turbine. The pool cleaner is intermittently turned from its path of travel along an underwater surface. A turning cam is provided inwardly of and adjacent to each of a pair of the side wheels. The cams are rotatably mounted on the turbine driven wheel axle which extends between said wheels. Each cam intermittently extends a gripping formation beyond the operatively supporting surface of the adjacent wheel. The cams will preferably comprise a disc with an integral annular internal ring gear formed. An inner gear is fixed for rotation with the axle and an outer gear is supported between the inner gear and the ring gear to rotate the cam. The inner gear is an interrupted gear member to cause intermittent stepwise rotation of the ring gear and the outer gear is a sprocket supported for unidirectional rotation. The cams and gripping formations are arranged so that, when they engage the pool surface, they impart movement to the cleaner which is in the opposite direction to the direction of travel.

With the increasing demands of users, a multi-functional robot may be in demand. With the increasing of functional modules, the height and weight of the multi-functional robot are increased accordingly, and the center of gravity of the complete multi-functional robot is located in a middle portion of a machine body. Thus, with the higher center of gravity, the multi-functional robot is prone to jolt when encountering the uneven surfaces such as the slope and the small step, which affects the stability of the multi-functional robot. Particularly, when the robot encounters a pit or the step, the center of gravity of the robot will shift backwards, and a rear end of the robot lands accordingly, leading to that the robot is prone to get stuck to the pit or the step. Or, if the multifunctional robot has a water tank for humidification, the multi-functional robot is prone to jolt when encountering the uneven surfaces such as the slope and the small step, which easily results in overflow of the water tank to cause bad situations like electrical short circuit of the robot or pollution.

### SUMMARY

This Summary is provided to introduce a selection of concepts in a simplified form that are further described below in the Description of Example Embodiments. This Summary is not intended to identify key features or essential characteristics of the claimed subject matter, nor is it intended to be used as an aid in determining the scope of the claimed subject matter.

At least one Technical problem that may be solved by the disclosure is a combined robot to overcome the defects in other applications. With the adoption of floating supporting mechanism, the floating supporting mechanism can extend and contract to support when the combined robot walks on uneven ground, so that the walking stability of the combined robot is improved, and hidden dangers like getting stuck during walking are reduced.

These and other example problems may be solved by the disclosure via the following technical scheme:
a combined robot, comprising a self-moving robot and a functional module, in which the functional module is detachably combined into the self-moving robot through a connector; and driving wheels and a follower wheel are disposed at a bottom of a machine body of the self-moving robot. Additionally or alternatively, by taking an advancing direction when the self-moving robot operates as a forward direction, the driving wheels are located on a left side and a right side of the bottom of the machine body. In these or other embodiments, the follower wheel is located at a front end or a rear end of the bottom of the machine body. Moreover, a control center is disposed in the combined robot, and the control center is configured to control the combined robot to operate. Additionally or alternatively, one end, far away from the follower wheel, of the bottom of the machine body of the self-moving robot is a supporting end; and the floating supporting mechanism is disposed at the supporting end, so that the machine body of the self-moving robot is kept parallel to a walking plane when the self-moving robot walks.

To help keep the balance of the combined robot, a distance between the floating supporting mechanism and a vertex of the supporting end may be less than or equal to 1/3 of a length of the machine body of the self-moving robot.

To achieve a better supporting effect, the distance between the floating supporting mechanism and the vertex of the supporting end may be less than or equal to 1/2 of a distance between the corresponding driving wheel and the vertex of the supporting end. To help allow the combined robot to walk better, a distance such as a maximum distance between the floating supporting mechanism and the bottom of the machine body of the robot and another distance such as a minimum distance between the corresponding driving wheel and the bottom of the machine body of the robot may be similar to or identical. Additionally or alternatively, a floating distance of the floating supporting mechanism may be less than or equal to 10 mm.

Additionally or alternatively, a quantity of the floating supporting mechanism is set to be two, and the two floating supporting mechanisms are disposed on a left side and a right side of the supporting end respectively. To equip the self-moving robot with a wiping function, a cleaning cloth assembly is detachably mounted at the supporting end and is located between the two floating supporting mechanisms.

Additionally or alternatively, the machine body of the self-moving robot comprises a base; the base is provided with an accommodation space; and the floating supporting mechanism is slidably disposed in the accommodation space. Further, the floating supporting mechanism comprises a spring, a supporting wheel and a bracket. The supporting wheel includes a wheel and a rotary shaft, in which the rotary shaft is disposed on the brackets, and the bracket is elastically connected with the base through the springs. Additionally or alternatively, the floating supporting mechanism comprises a spring and a supporting frame, in which the supporting frame comprises a supporting end and a connecting end. The supporting end is partially exposed out of the base, and the connecting end is elastically connected with the base through the springs. In these or other embodiments, the supporting frame is made of anti-static wear-resistant materials.

To facilitate the combination of the combined robot, the connector comprises a body; a boss disposed on one side of the body; a locating column disposed on the other side of the body; the functional module comprises a pit disposed on a lower surface thereof, which is set correspondingly to the boss in number and position; the self-moving robot comprises a groove disposed on an upper surface thereof, which is set correspondingly to the locating column in number and position.

Thus, in some embodiments, the combined robot provided in the disclosure has the advantages that with the adoption of the floating supporting mechanism, the floating supporting mechanism can extend and contract to support when the combined robot walks on uneven ground, so that the walking stability of the combined robot is improved, and hidden dangers like getting stuck during walking are reduced.

### BRIEF DESCRIPTION OF THE DRAWINGS

The technical scheme of the disclosure is described in detail in combination with accompanying drawings and preferred embodiments.
Fig. 1 is an exploded diagram of a combined robot provided in an example of the disclosure;
Fig. 2 is a bottom view of a self-moving robot provided in an example of the disclosure;
Fig. 3 is a walking diagram of the self-moving robot, provided in the example of the disclosure, on a flat surface;
Fig. 4 is a walking diagram of the self-moving robot, provided in the example of the disclosure, when encountering a step;
Fig. 5 is a structure diagram of a floating supporting mechanism provided in an example of the disclosure; and
Fig. 6 is a structure diagram of a floating supporting mechanism provided in another example of the disclosure.

### DESCRIPTION OF EXAMPLE EMBODIMENTS

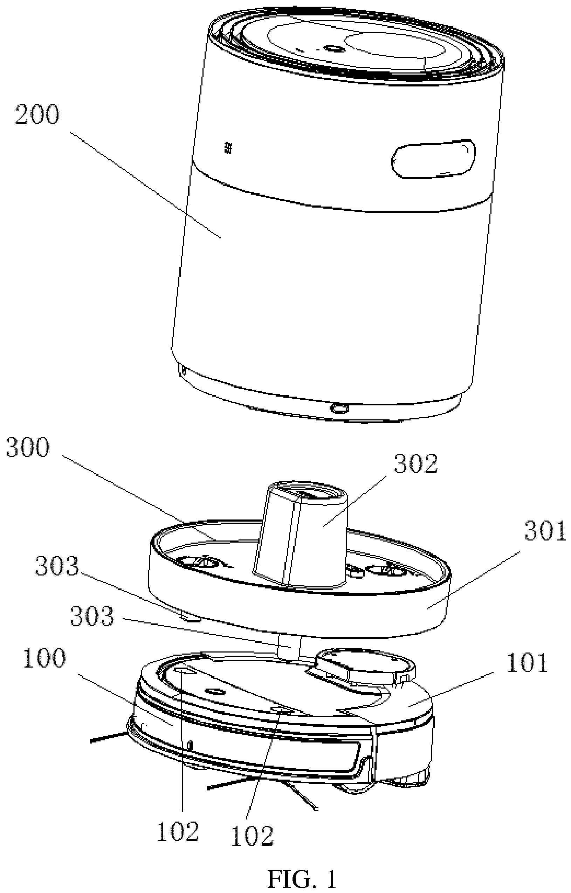

Fig. 1 is an exploded diagram of a combined robot provided in this example. As shown in Fig. 1, the example provides a combined robot, comprising a self-moving robot 100 and a functional module 200, wherein the functional module 200 is detachably combined into the self-moving robot 100 through a connector 300. Additionally or alternatively, the connector may comprise any one or any combination of a connecting piece, a connecting block, a connecting plate. Additionally or alternatively, the connector may be constructed by other shapes or orther component(s).. Additionally or alternatively, a control center (not shown in the drawing) is disposed in the self-moving robot 100 and is used for controlling the combined robot to operate. In these or other embodiments, the connector 300 comprises: a body 301, a boss 302 disposed on one side of the body 301, and a locating column 303 disposed on the other side of the body 301. Additionally or alternatively, a pit (not shown in Fig. 1) is disposed in a lower surface of the functional module 200.
connectorIn some embodiments, the set quantity and the set position of the pit correspond to the set quantity and the set position of the boss 302. In these or other embodiments, a groove 102 is disposed on an upper surface 101 of the self-moving robot 100. Additionally or alternatively, the set quantity and the set position of the groove 102 correspond to the set quantity and the set position of the locating column 303, so that the functional module 200 is combined into an upper portion of the self-moving robot 100. For example, the combined robot combines and connects the functional module 200 to be connected with the self-moving robot 100 through the connector 300. Additionally or alternatively, a power supply module is disposed on the connector 300, and can supply electric energy on the self-moving robot 100 to the functional module 200 through an electronic contact.

In these or other embodiments, the functional module 200 includes one or more modules such as a security and protection module, a humidification module and a purification module. The security and protection module, for example, comprises a camera and a communication module, and the camera is connected with a remote terminal through the communication module (such as a WLAN wireless access point and a router), so that a user of the remote terminal can monitor a surrounding environment of the combined robot through a viewing screen. The humidification module can atomize water and then spray out to humidify the surrounding environment of the combined robot. Additionally or alternatively, the purification module, for example, comprises a negative ion generation module, and a photocatalyst catalysis module or/and a dust filter device, so that bacteria are killed, a peculiar smell is removed and free particulate matter in air is absorbed effectively, and an effect of purifying the air is achieved.

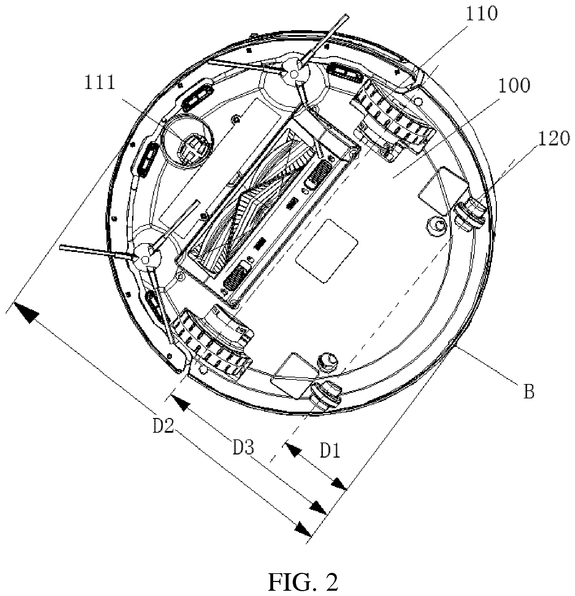

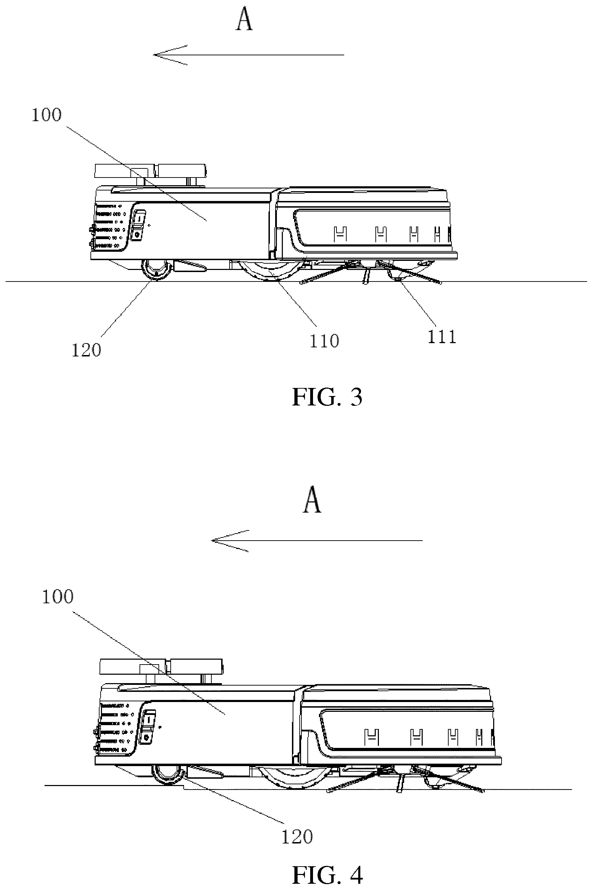

Fig. 2 is a bottom view of a self-moving robot in this example. As shown in Fig. 2, a walking unit and a cleaning unit are disposed on a machine body of the self-moving robot 100. The walking unit comprises a motor (not shown in Fig. 2), driving wheels 110, and a follower wheel 111. The control center controls the combined robot to operate and controls the motor to output power outwards to drive the driving wheels 110 to rotate. As shown in Fig. 3, by taking an advancing direction when the self-moving robot operates as a forward direction, the driving wheels 110 are located on a left side and a right side of the bottom of the machine body; and the follower wheel 111 is located at a front end or a rear end of the bottom of the machine body.

As shown in Fig. 2 and Fig. 3, one end, far away from the follower wheel 111, of the bottom of the machine body of the self-moving robot is a supporting end; and a floating supporting mechanism 120 is disposed at the supporting end. It should be noted that the quantity of the floating supporting mechanism 120 is not limited therein. There may be only one floating supporting mechanism 120, or two floating supporting mechanisms 120, or even more. When the self-moving robot encounters uneven ground, the floating supporting mechanism 120 can extend and contract to support, so that the machine body of the self-moving robot is kept parallel to a walking plane when the self-moving robot walks, the walking stability of the robot is improved, and hidden dangers like getting stuck during walking can be reduced.

Additionally or alternatively, a distance D1 between the floating supporting mechanism 120 and a vertex B of the supporting end is not greater than 1/3 of a length D2 of the machine body of the self-moving robot 100. In one embodiment as shown in Fig. 2, the self-moving robot 100 has a disc-shaped machine body, and correspondingly, the length D2 of the machine body of the self-moving robot 100 is the diameter of a disc. To achieve a better supporting effect, the distance D1 between the floating supporting mechanism 120 and the vertex B of the supporting end is less than or equal to 1/2 of a distance D2 between the corresponding driving wheel 110 and the vertex B of the supporting end. If the floating supporting mechanism 120 is too close to the driving wheels 110 (the distance is less than 1/2 of the distance between driving wheel 110 and the vertex B of the supporting end), when encountering walking surfaces like a step or a slope, a rear end of the self-moving robot may contact with or prop against the walking surfaces occasionally, which may potentially result in an inability of the robot to walk. Fig. 3 is a walking diagram of the self-moving robot in this example on a flat surface. Fig. 4 is a walking diagram of the self-moving robot in this example when encountering a step. As shown in Fig. 3 and Fig. 4, when the self-moving robot 100 walks on the flat surface, the floating supporting mechanism 120 is in contact with the flat surface, and the floating supporting mechanism 120 and the driving wheels 110 together support the self-moving robot 100, so that the self-moving robot 100 is kept horizontal. When the self-moving robot 100 encounters the step, the floating supporting mechanism 120 is extruded to contract, and the self-moving robot 100 is kept substantially horizontal under the support of the floating supporting mechanism 120 and the driving wheels 110. When the self-moving robot 100 encounters a pit, the floating supporting mechanism 120 extends, and bottom of the floating supporting mechanism 120 contacts with the pit, and the self-moving robot 100 is kept substantially horizontal under the support of the floating supporting mechanism 120 and the driving wheels 110.

In these or other embodiments, as shown in Fig. 2, the quantity of the floating supporting mechanism 120 is set to be two (in other words, there are two floating supporting mechanisms 120), and the two floating supporting mechanisms 120 are disposed on a left side and a right side of the supporting end respectively, so that a using space of the supporting end is reserved. For example, the self-moving robot in the disclosure is a cleaning robot; a cleaning cloth assembly is detachably mounted at the supporting end; and the cleaning cloth assembly is located between the two floating supporting mechanisms 120. Additionally or alternatively, when there are two floating supporting mechanisms 120, the distance D1 between the floating supporting mechanism 120 and a vertex B of the supporting end mentioned above may be a distance between a center of gravity of the two floating supporting mechanisms 120 and the vertex B of the supporting end, or a distance between a center point among the two floating supporting mechanisms 120 and the vertex B of the supporting end, and so.

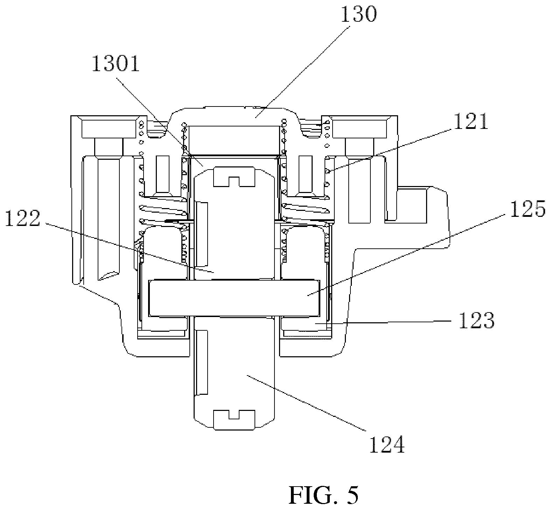

Fig. 5 is a structure diagram of the floating supporting mechanism. As shown in Fig. 5, the machine body of the self-moving robot 100 in this example comprises a base 130. The base 130 is provided with an accommodation space 1301, and the floating supporting mechanism 120 can slide in the accommodation space 1301. For example, the floating supporting mechanism 120 can contract into the accommodation space and partially extend out of the accommodation space. In these or other embodiments, the floating supporting mechanism comprises a spring 121, a supporting wheel 122 and a bracket 123. The supporting wheel 122 may include a wheel 124 and a rotary shaft 125, in which the rotary shaft 125 is disposed on the bracket 123, and the brackets 123 are elastically connected with the base 130 through the spring 121, so that the supporting wheel 122 is elastically connected with the self-moving robot 100. Although there are more than one springs are provided in the preferred embodiment, the quantity of the spring is not limited therein.

In these or other embodiments, when the self-moving robot 100 walks on a flat surface, the spring 121 is in compressed states, and the supporting wheel 122 and the driving wheels 110 jointly support the self-moving robot 100, so that the self-moving robot 100 is kept substantially horizontal. When the self-moving robot 100 encounters a step, the supporting wheel 122 is extruded by the step, the spring 121 contract, and the self-moving robot 100 is kept substantially horizontal under the support of the supporting wheel 122 and the driving wheels 110. Additionally or alternatively, when the self-moving robot 100 encounters a pit, the spring 121 extends, the supporting wheels 122 prop against the pit, and the self-moving robot 100 is kept substantially horizontal under the support of the supporting wheel 122 and the driving wheels 110.

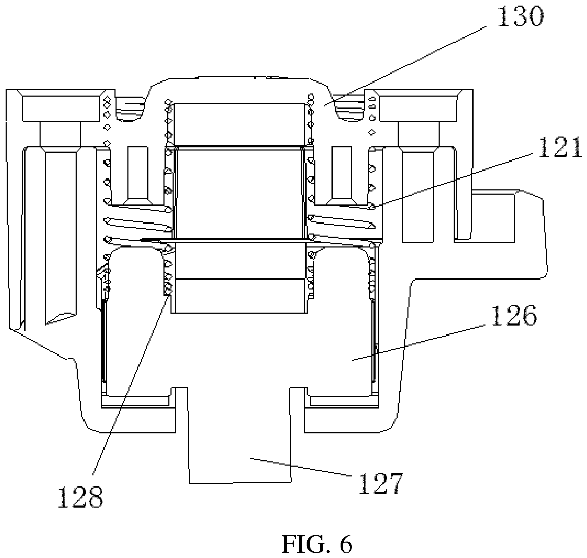

Fig. 6 is a structure diagram of a floating supporting mechanism provided in another example. As shown in Fig. 6, a base 130 of a self-moving robot 100 in this example is provided with an accommodation space 1301. The floating supporting mechanism can slide in the accommodation space 1301. For example, the floating supporting mechanism 120 can contract into the accommodation space and partially extend out of the accommodation space. In these or other embodiments, the floating supporting mechanism comprises a spring 121 and a supporting frame 126. Additionally or alternatively, the supporting frame 126 comprises protruding ends 127 and connecting ends 128. In some embodiments, the protruding ends 127 are in contact with an operating surface and are partially exposed out of the base 130, and the connecting ends 128 are elastically connected with the base 130 through the spring 121, so that the supporting frame 126 is elastically connected with the self-moving robot 100. Additionally or alternatively, the supporting frame 126 is made of anti-static wear-resistant materials;

In these or other embodiments, when the self-moving robot 100 walks on a flat surface, the spring 121 is in compressed states, and the supporting frame 126 and the driving wheels 110 jointly support the self-moving robot 100, so that the self-moving robot 100 is kept substantially horizontal. Additionally or alternatively, when the self-moving robot 100 encounters a step, the supporting frame 126 is extruded by the step, the spring 121 contract, and the self-moving robot 100 is kept substantially horizontal under the support of the supporting frame 126 and the driving wheels 110. In these or other embodiments, when the self-moving robot 100 encounters a pit, the spring 121 extends, the supporting frame 126 prop against the pit, and the self-moving robot 100 is kept substantially horizontal under the support of the supporting frame 126 and the driving wheels 110.

Thus, in some embodiments, by utilizing the two kinds of the floating supporting mechanism as shown in Fig. 5 and Fig. 6 above, the spring 121 extends, and the supporting wheel 122 or the supporting frame 126 prop against the pit when the self-moving robot 100 encounters the pit. In some embodiments, supporting forces of the supporting wheel 122 or the supporting frame 126 may be too great, and will affect frictional forces between the driving wheels and the ground, potentially leading to the self-moving robot walking inefficiently or not walking at all. To improve the walking efficiency of the robot, the floating supporting mechanism may not affect or may slightly affect the frictional forces between the driving wheels and the ground. For example, as shown in Fig. 3, when a maximum distance between floating supporting mechanism 120 and the bottom of the machine body of the robot and a minimum distance between the corresponding driving wheel and the bottom of the machine body of the robot are identical, the floating supporting mechanism 120 is in contact with the flat surface, and the floating supporting mechanism and the driving wheels 110 together support the self-moving robot 100 when the self-moving robot 100 walks on the flat surface, so that the self-moving robot 100 is kept substantially horizontal. At this moment, the floating supporting mechanism 120 has little supporting forces. In addition, to reduce jolts during walking of the robot, a distance difference between the minimum distance between the floating supporting mechanism 120 and the bottom of the machine body of the robot and the maximum distance between the floating supporting mechanism 120 and the bottom of the machine body of the robot is less than or equal to 10 mm (that is, the floating distance of the floating supporting mechanism is less than or equal to 10 mm). In these or other embodiments, the driving wheels are connected with the base of the self-moving robot through the spring generally, and when the robot is placed on the ground, the distance between the driving wheel and the bottom of the robot is reduced, e.g., to a minimum (the driving wheels are pressed by the machine body and the spring contract), which is described in detail in U.S. Patent No. 8,474,090.

Thus, in some embodiments, the combined robot provided with the floating supporting mechanism has the advantages that when the combined robot walks on the uneven ground, the floating supporting mechanism can extend and contract to support, so that the walking stability of the combined robot is improved, and a jolting phenomenon and hidden dangers like getting stuck during walking are reduced.

## Claims

1. A combined robot, comprising:
a self-moving robot (100) and a functional module (200) detachably combined into the self-moving robot through a connector (300);
driving wheels (110) and a follower wheel (111) disposed at a bottom of a machine body of the self-moving robot such that:
the driving wheels are located on a left side and a right side of the bottom of the machine body by taking an advancing direction when the self-moving robot operates at a forward direction; and
the follower wheel is located at a front end or a rear end of the bottom of the machine body; and
a control center is disposed in the combined robot and controls the combined robot to operate, wherein one end away from the follower wheel of the bottom of the machine body of the self-moving robot is a supporting end,
wherein the combined robot further comprises:
floating supporting mechanisms (120) disposed at the supporting end such that the machine body of the self-moving robot is kept parallel to a walking plane when the self-moving robot walks,
wherein the floating supporting mechanisms (120) provide retractable support to the self-moving robot (100), and
when the self-moving robot (100) encounters a step, the floating supporting mechanism (120) is extruded to contract.

2. The combined robot of claim 1, wherein the set quantity of the floating supporting mechanisms (120) is two, and the floating supporting mechanisms are disposed on a left side and a right side of the supporting end respectively.

3. The combined robot of claim 2, wherein a cleaning cloth assembly is detachably mounted at the supporting end, and is located between the two floating supporting mechanisms (120).

4. The combined robot of claim 1, wherein:
the machine body of the self-moving robot (100) comprises a base (130) provided with an accommodation space; and
the floating supporting mechanisms (120) are slidably disposed in the accommodation space.

5. The combined robot of claim 4, wherein:
each of the floating supporting mechanisms comprises springs (121), supporting wheels (122) and brackets (123);
the supporting wheels include wheels (124) and rotary shafts (125); and
the rotary shafts (125) are disposed on the brackets elastically connected with the base (130) through the springs.

6. The combined robot of claim 4, wherein:
each of the floating supporting mechanisms comprises springs (121) and supporting frames (126); and
the supporting frames comprise protruding ends (127) and connecting ends (128), the protruding ends (127) being partially exposed out of the base (130), and the connecting ends being elastically connected with the base through the springs.

7. The combined robot of claim 6, wherein the supporting frames (126) are made of anti-static wear-resistant materials.

8. The combined robot of claim 1, wherein the connector (300) comprises:
a body;
a boss disposed on one side of the body;
a locating column disposed on the other side of the body, and
the functional module (200) comprises a pit disposed on a lower surface thereof, which is set correspondingly to the boss in number and position, and
the self-moving robot (100) comprises a groove disposed on an upper surface thereof, which is set correspondingly to the locating column in number and position .

9. The combined robot of claim 1, wherein the distance between each floating supporting mechanism (120) and a vertex (B) of the supporting end is less than or equal to 1/2 of a distance between the corresponding driving wheel (110) and the vertex (B) of the supporting end.

10. The combined robot of claim 1, wherein:
a floating distance of the floating supporting mechanism is less than or equal to 10 mm.

## Patentansprüche

1. Ein kombinierter Roboter, aufweisend:
einen selbstfahrenden Roboter (100) und ein Funktions-Modul (200), welches durch eine Verbindungsvorrichtung (300) in dem selbstfahrenden Roboter lösbar kombiniert ist,
Antriebsräder (110) und ein mittlaufendes Rad (111), welches an einem Boden eines Vorrichtung-Körpers des selbstfahrenden Roboters derart angeordnet ist, dass:
die Antriebsräder an einer linken Seite und einer rechten Seite des Bodens des Vorrichtung-Körpers positioniert sind, indem eine Fahr-Richtung eingenommen wird, wenn der selbstfahrende Roboter in einer Vorwärts-Richtung arbeitet, und
das mitlaufende Rad an einem vorderen Ende oder einem hinteren Ende des Bodens des Vorrichtung-Körpers positioniert ist, und
eine Steuerungszentrale, welche im kombinierten Roboter angeordnet ist, und den kombinierten Roboter steuert, um zu arbeiten, wobei ein Ende entfernt vom mitlaufenden Rad des Bodens des selbstfahrenden Roboters ein Stütz-Ende ist,
wobei der kombinierte Roboter weiter aufweist:
schwebende Stütz-Mechanismen (120), welche am Stütz-Ende angeordnet sind, so dass der Vorrichtung-Körper des selbstfahrenden Roboters parallel zu einer Lauf-Ebene gehalten ist, wenn der selbstfahrende Roboter läuft,
wobei die schwebenden Stütz-Mechanismen (120) einziehbare Lagerungen für den selbstfahrenden Roboter (100) bereitstellen, und
wenn der selbstfahrende Roboter (100) auf eine Stufe trifft, der schwebende Stütz-Mechanismus (120) ausgeweitet ist, um eingezogen zu werden.

2. Der kombinierte Roboter gemäß Anspruch 1, wobei die vorgegebene Anzahl an schwebenden Stütz-Mechanismen (120) zwei ist, und die schwebenden Stütz-Mechanismen an einer linken Seite und einer rechten Seite des Stütz-Endes angeordnet sind.

3. Der kombinierte Roboter gemäß Anspruch 2, wobei eine Reinigungs-Tuch-Anordnung abtrennbar am Stütz-Ende befestigt ist, und zwischen den zwei schwebenden Stütz-Mechanismen (120) positioniert ist.

4. Der kombinierte Roboter gemäß Anspruch 1, wobei:
der Vorrichtung-Körper des selbstfahrenden Roboters (100) eine Basis (130) aufweist, welche mit einem Aufnahme-Raum bereitgestellt ist, und
die schwebenden Stütz-Mechanismen (120) verschiebbar in dem Aufnahme-Raum angeordnet sind.

5. Der kombinierte Roboter gemäß Anspruch 4, wobei:
jeder der schwebenden Stütz-Mechanismen Federn (121), Stütz-Räder (122) und Halterungen (123) aufweist,
die Stütz-Räder Räder (124) und drehbare Wellen (125) enthalten, und
die drehbaren Wellen (125) auf den Halterungen, welche durch die Federn elastisch mit der Basis (130) verbunden sind, angeordnet sind.

6. Der kombinierte Roboter gemäß Anspruch 4, wobei:
jeder der schwebenden Stütz-Mechanismen Federn (121) und Stütz-Rahmen (126) aufweist, und
die Stütz-Rahmen hervorstehende Enden (127) und Verbindungs-Enden (128) aufweisen, wobei die hervorstehenden Enden (127) teilweise aus der Basis (130) heraus exponiert sind, und die Verbindungs-Enden elastisch mit der Basis durch die Federn verbunden sind.

7. Der kombinierte Roboter gemäß Anspruch 6, wobei die Stütz-Rahmen (126) aus anti-statischen, abnutzungs-resistenten Materialien sind.

8. Der kombinierte Roboter gemäß Anspruch 1, wobei die Verbindungsvorrichtung (300) aufweist:
einen Körper,
einen Ansatz, welcher an einer Seite des Körpers angeordnet ist,
eine Positionierungs-Säule, welche an der anderen Seite des Körpers angeordnet ist, und
das Funktions-Modul (200), welches eine Vertiefung aufweist, welche an einer unteren Fläche davon angeordnet ist, welche hinsichtlich der Anzahl und Position entsprechend des Ansatzes eingerichtet ist, und
der selbstfahrende Roboter (100), welcher eine Kerbe aufweist, welche an einer oberen Fläche davon angeordnet ist, welche hinsichtlich der Anzahl und Position entsprechend der Positionierungs-Säule angeordnet ist.

9. Der kombinierte Roboter gemäß Anspruch 1, wobei die Distanz zwischen jedem schwebenden Stütz-Mechanismus (120) und einem Scheitel (B) des Stütz-Endes kleiner oder gleich ½ einer Distanz zwischen dem entsprechenden Antriebsrad (110) und dem Scheitel (B) des Stütz-Endes ist.

10. Der kombinierte Roboter gemäß Anspruch 1, wobei:
eine Schwebe-Distanz des schwebenden Stütz-Mechanismus kleiner oder gleich 10 mm ist.

## Revendications

1. Robot combiné, comprenant :
un robot automoteur (100) et un module fonctionnel (200) combiné de manière amovible dans le robot automoteur par un connecteur (300) ;
des roues motrices (110) et une roue subordonnée (111) disposées à une partie inférieure d'un corps de machine du robot automoteur de sorte que :
les roues motrices sont situées sur un côté gauche et un côté droit de la partie inférieure du corps de machine en prenant une direction d'avance lorsque le robot automoteur fonctionne dans une direction avant ; et
la roue subordonnée est située à une extrémité avant ou une extrémité arrière de la partie inférieure du corps de machine ; et
un centre de commande est disposé dans le robot combiné et commande le fonctionnement du robot combiné, où une extrémité éloignée de la roue subordonnée de la partie inférieure du corps de machine du robot automoteur est une extrémité de support,
le robot combiné comprenant en outre :
des mécanismes de support flottants (120) disposés à l'extrémité de support de sorte que le corps de machine du robot automoteur est maintenu parallèle à un plan de marche lorsque le robot automoteur marche,
où les mécanismes de support flottants (120) fournissent un support rétractable au robot automoteur (100), et
lorsque le robot automoteur (100) rencontre une marche, le mécanisme de support flottant (120) est extrudé pour se contracter.

2. Robot combiné selon la revendication 1, dans lequel la quantité définie des mécanismes de support flottants (120) est de deux, et les mécanismes de support flottants sont disposés respectivement sur un côté gauche et un côté droit de l'extrémité de support.

3. Robot combiné selon la revendication 2, dans lequel un ensemble de tissu de nettoyage est monté de manière amovible à l'extrémité de support, et est situé entre les deux mécanismes de support flottants (120).

4. Robot combiné selon la revendication 1, dans lequel :
le corps de machine du robot automoteur (100) comprend une base (130) pourvue d'un espace de logement ; et
les mécanismes de support flottants (120) sont disposés de manière coulissante dans l'espace de logement.

5. Robot combiné selon la revendication 4, dans lequel :
chacun des mécanismes de support flottants comprend des ressorts (121), des roues de support (122) et des éléments de fixation (123) ;
les roues de support comprennent des roues (124) et des arbres rotatifs (125) ; et
les arbres rotatifs (125) sont disposés sur les éléments de fixation reliés élastiquement à la base (130) par les ressorts.

6. Robot combiné selon la revendication 4, dans lequel :
chacun des mécanismes de support flottants comprend des ressorts (121) et des cadres de support (126) ; et
les cadres de support comprennent des extrémités saillantes (127) et des extrémités de liaison (128), les extrémités saillantes (127) étant partiellement exposées hors de la base (130), et les extrémités de liaison étant reliées élastiquement à la base par les ressorts.

7. Robot combiné selon la revendication 6, dans lequel les cadres de support (126) sont fabriqués en matériaux antistatiques et résistants à l'usure.

8. Robot combiné selon la revendication 1, dans lequel le connecteur (300) comprend :
un corps ;
un bossage disposé sur un côté du corps ;
une colonne de positionnement disposée de l'autre côté du corps, et
le module fonctionnel (200) comprend un creux disposé sur une surface inférieure de celui-ci, qui est établi en correspondance au bossage en ce qui concerne le nombre et la position, et
le robot automoteur (100) comprend une rainure disposée sur une surface supérieure de celui-ci, qui est établie en correspondance à la colonne de positionnement en ce qui concerne le nombre et la position.

9. Robot combiné selon la revendication 1, dans lequel la distance entre chaque mécanisme de support flottant (120) et un sommet (B) de l'extrémité de support est inférieure ou égale à la moitié d'une distance entre la roue motrice correspondante (110) et le sommet (B) de l'extrémité de support.

10. Robot combiné selon la revendication 1, dans lequel :
une distance de flottement du mécanisme de support flottant est inférieure ou égale à 10 mm.
